# EUROPÄISCHE PATENTSCHRIFT

(11) **EP 1 269 422 B1**
(45) Veröffentlichungstag und Bekanntmachung des Hinweises auf die Patenterteilung: **31.03.2004**
(21) Anmeldenummer: 01921002.0
(22) Anmeldetag: 02.04.2001
(51) Int. Cl.: G07C 5/08, G01D 9/00

(54) **EINRICHTUNG ZUM ÜBERWACHEN VON BERGBAUMASCHINEN**
DEVICE FOR MONITORING MINING MACHINES
DISPOSITIF POUR SURVEILLER DES ENGINS D'EXPLOITATION MINIERE

(30) Priorität: 03.04.2000 AT 5552000
(43) Veröffentlichungstag der Anmeldung: 02.01.2003
(73) Patentinhaber: VOEST-ALPINE Bergtechnik Gesellschaft m.b.H, 8740 Zeltweg (AT)
(72) Erfinder: DRÖSCHER, Bernhard, A-8740 Zeltweg (AT); MADL, Gerhard, A-8740 Zeltweg (AT); DOMIAN, Konrad, A-8720 Knittelfeld (AT)
(74) Vertreter: Haffner, Thomas M., Dr.
(86) Internationale Anmeldenummer: PCT/AT2001/000093
(87) Internationale Veröffentlichungsnummer: WO 2001/075808

(56) Entgegenhaltungen:
- WO-A-93/21583
- US-A- 4 035 621
- US-A- 5 659 470

## Beschreibung

Die Erfindung bezieht sich auf eine Einrichtung zum Überwachen von Bergbaumaschinen, insbesondere Streckenvortriebs- oder Gewinnungsmaschinen, bei welcher Meßdaten für Betriebsparameter wie z.B. die Leistungsaufnahme, die Motortemperatur oder die Schrämarmstellung erfaßt werden.

Aus der DE 39 27 414 A1 ist ein Verfahren zur Überwachung von Antrieben sowie eine Meßeinrichtung bekannt geworden, bei welcher Antriebe unter Tage durch Strommessungen und Temperaturmessungen überwacht werden. Derartige Meßeinrichtungen erlauben es, die gegenwärtigen Parameter zu erfassen und die Maschine entsprechend zu steuern. In diesem Zusammenhang sind auch bereits Anzeigevorrichtungen vorgeschlagen worden, mit welchen die Position des Schrämarms bzw. der Schrämwerkzeuge erfaßt und beispielsweise auf einem Schirm dargestellt werden kann, was insbesondere dann vorteilhaft ist, wenn ein unmittelbarer Sichtkontakt zur Ortsbrust durch hohe Staubbildung erschwert ist. Gemeinsam ist den bekannten Meßvorrichtungen, daß jeweils aktuelle Parameter erfaßt werden, um auf diese Weise eine korrekte Steuerung der Maschine zu ermöglichen. Einzelne Teile von Vortriebsmaschinen, und insbesondere Antriebe, sind zumeist auch durch entsprechende Sicherungen abgesichert. So wird beispielsweise mit einer Temperaturmessung durch Kaltleiter, welche in die Motorwicklung eingelassen sind, eine unzulässige Erwärmung festgestellt, wobei weiters automatische Sicherungen vorgesehen sind, welche im Überlastfall den Antrieb von der Stromversorgung trennen. Für die korrekte Funktion derartiger Maschinen ist naturgemäß auch eine entsprechend zuverlässige Stromversorgung erforderlich, und es wurde unter anderem in der DE 39 27 414 A1 vorgeschlagen, die jeweilige Phasenlage zu erfassen, und auf diese.. Weise die Auslastung der Untertageantriebe und des elektrischen Versorgungsnetzes auch bezüglich Blindleistung, Wirkleistung und Scheinleistung zu messen, um eine einwandfreie Überwachung sicherzustellen.

In elektronischen Vielfachmeßgeräten wurde bereits vorgeschlagen, die jeweiligen Meßdaten in einem Speicher abzulegen und diese über eine Schnittstelle an eine Datenverarbeitungsanlage weiterzuleiten.

Überwachungseinrichtungen, welche neben der vorhandenen Anzeige der jeweiligen Betriebsparameter und der jeweiligen Steuerung von Antrieben parallel und unsichtbar eine Speicherung der Meßdaten gewährleisten, sind bisher in Flugzeugen in Form einer sogenannten "Blackbox" im Einsatz, wobei eine bestimmte Auswahl von Betriebsparametern über einen bestimmten Zeitraum gespeichert wird. Die Auswertung der in einer Blackbox gespeicherten Signale erlaubt es in der Folge, auf Unfallursachen rückzuschließen, wobei eine definierte Auswahl von relevanten Parametern getroffen werden muß, welche in einem derartigen Speicher abgelegt werden.

Ähnlich verhält es sich bei Fahrtenschreibern, welche in Lastkraftwagen die Einhaltung der erforderlichen Pausen sowie die jeweils gefahrenen Geschwindigkeiten überwachen und aufzeichnen, wobei derartige Aufzeichnungsgeräte zusätzlich zu den vorhandenen Meßgeräten, wie beispielsweise einem Tachometer, vorgesehen sind.

Für die Überwachung untertägiger Bergbaumaschinen wurde bisher lediglich darauf vertraut, daß die jeweils aktuellen und gemessenen Parameter eine vollständige Auskunft über die korrekte Betriebsweise ergeben.

Die Erfindung zielt nun darauf ab, eine Einrichtung der eingangs genannten Art zu schaffen, welche zusätzlich zu den bekannten Meß- und Steuereinrichtungen die Möglichkeit schafft, im Falle von Reklamationen Ursachen zu erkennen, wie sie nach Auftreten eines Defektes nicht wieder rekonstruiert werden können. Dies gilt insbesondere beispielsweise dann, wenn durch Manipulation Sicherungen überbrückt werden oder die Signale von Kaltleitern überbrückt werden, um in extremen Fällen einen Weiterbetrieb zu ermöglichen, woraus in der Folge ein Schadensfall und ein Reklamationsfall resultieren können. Um die Berechtigung derartiger Reklamationen und eine tatsächliche Rekonstruktion der Situation, welche zu einem Schaden geführt hat, zu ermöglichen, wird zur Lösung dieser Aufgabe erfindungsgemäß eine Einrichtung vorgeschlagen, mit welcher die zusätzliche Überwachung von Bergbaumaschinen, und insbesondere Streckenvortriebs- oder Gewinnungsmaschinen ermöglicht wird, wobei die erfindungsgemäße Ausbildung im wesentlichen darin besteht, daß ein von den Kontroll- und Steuereinrichtungen der vortriebsmaschine verschiedener Meßdatenspeicher vorgesehen ist, in welchem die Meßdaten gemeinsam mit der aus einer Zeitbasis des Meßdatenspeichers abgeleiteten Zeit über einen vorbestimmten Zeitraum speicherbar sind, und daß der Meßdatenspeicher eine Schnittstelle für das Auslesen der gespeicherten Daten aufweist. Dadurch, daß nicht nur aktuelle Werte angezeigt werden, sondern tatsächlich über einen vorbestimmten Zeitraum von beispielsweise einer Arbeitsschicht oder einer Woche die Daten in vorbestimmten Zeitintervallen zwischengespeichert werden, lassen sich unzulässige Manipulationen und beispielsweise der Betrieb einer Vorrichtung mit nicht zulässigen Betriebsparametern auch nachträglich erkennen, und es wird insbesondere möglich, nicht gerechtfertigte Reklamationen, bei welchen Schäden unter Verletzung der Anweisungen von Betriebsanleitungen entstanden sind, zu erkennen. Die erfindungsgemäße Einrichtung kann hierbei entsprechend gekapselt und unzugänglich angeordnet sein, sodaß Manipulationen in jedem Fall erkannt werden können, wofür die Ausbildung so getroffen ist, daß der Meßdatenspeicher lösbar mit der Bergbaumaschine verbunden ist. Die lösbare Verbindung kann beispielsweise durch ein entsprechendes Schloß gesichert sein, wobei die Ausbildung so getroffen sein kann, daß die Schnittstellen zum Ein- bzw. Auslesen von Meßdaten mechanisch oder elektronisch sperrbar ausgebildet sind, sodaß auch nachträglich eine Manipulation der gespeicherten Meßdaten von unberechtigter Seite verhindert werden kann.

Die Bedingungen für den Betrieb von Bergbaumaschinen sind in hohem Maße vom Einsatzort abhängig. Eine kontinuierliche Überwachung der jeweils für den Betrieb unbedingt erforderlichen Voraussetzungen, wie beispielsweise die Spannungsversorgung, läßt es in der Regel nur zu, unmittelbar während des Betriebes auf geänderte Bedingungen Rücksicht zu nehmen, wobei jedoch Langzeitauswirkungen in keiner Weise erkannt werden können. Bedingt durch den Umstand, daß der gleiche Maschinentyp beispielsweise beim Auffahren einer Strecke im Zuge des Vortriebes auf unterschiedliche Gesteinsbeschaffenheit trifft und daher Betriebsbedingungen, welche über einen vorbestimmten Zeitraum als zulässig angesehen werden müssen, sich kurzfristig beispielsweise aufgrund von härterem Gestein als Betriebsbedingungen herausstellen, welche zu Schäden von Antrieb oder Maschine führen können, läßt sich aus einer derartigen Überwachung der jeweils momentanen Werte bestenfalls ein kurzfristiger Ausgleich durch eine entsprechende elektronische oder händische Steuerung bewirken, wobei die Möglichkeiten von irreversiblen Änderungen im Rahmen einer derartigen elektronischen Regelung oder einer händischen Steuerung in keiner Weise erkannt werden können. Dadurch, daß eine große Anzahl von Meßdaten, deren Bedeutung im Einzelfall nicht unbedingt erkannt werden muß, zwischengespeichert wird, lassen sich bei der nachträglichen Analyse die jeweiligen Beurteilungskriterien in einem Ausmaß variieren, wie es bei stationären Meßgeräten, und insbesondere auch bei Speichermeßgeräten, nicht möglich ist. Derartige Speichermeßgeräte oder Meßeinrichtungen für die aktuellen Werte setzen nämlich eine ganz bestimmte Verknüpfung der einzelnen Meßdaten voraus, um die jeweils gewünschte Aussage zu ermöglichen, welche nicht ohne weiteres nachträglich verändert werden kann.

Im Meßdatenspeicher liegt nun eine Reihe von Meßdaten vor, welche für den unmittelbaren Betrieb der Bergbaumaschine keine erkennbare Bedeutung aufweist. Insbesondere kann es vorkommen, daß eine Maschine längere Zeit an der Grenze der zulässigen. Betriebsbedingungen für die Temperatur betrieben wird. Erst eine nachträgliche Auswertung, aus welcher sich ergibt, daß der Zeitraum, über welchen derartige extreme Bedingungen, welche nicht als Fehlbedienungen erkannt wurden, aufrecht erhalten wurden, relativ lang ist, lassen sich nun Verknüpfungen mit anderen Meßdaten herstellen, und auf diese Weise Fehlerursachen ergründen, welche im Rahmen einer kontinuierlichen Überwachung nicht festgestellt werden könnten. Dies gilt insbesondere dann, wenn die Meßdaten über jeweils variable Zeiträume gemittelt werden und Mittelwerte oder quadratische Mittelwerte über frei definierte Intervalle gewählt werden. Ein derartiges Einzoomen in einen bestimmten Zeitraum erlaubt es, nachträglich Ursachen für ein Versagen oder einen Defekt aufzuklären, welche bei der üblichen Erfassung von Meßdaten nicht erfaßt werden können.

Insbesondere kann mit einem derartigen Meßdatenspeicher auch eine Reihe von unmittelbar nicht relevant erscheinenden Daten zeitgleich bzw. mit der zugehörigen Zeit gespeichert werden, sodaß verschiedene Parameter nachträglich unter jeweiliger Modifikation des Auswerteschemas miteinander in Beziehung gesetzt werden können, sodaß auf diese Weise Erkenntnisse gewonnen werden können, welche aus der Überwachung im kontinuierlichen Betrieb nicht ohne weiteres abgeleitet werden können. Mit Vorteil ist daher die Ausbildung erfindungsgemäß so getroffen, daß mit dem Meßdatenspeicher Sensoren für die Erfassung von für jede Phase gesonderten Meßdaten für Spannung, Stromverbrauch und Frequenz der Spannungsversorgung sowie zusätzlich Sensoren für die Erfassung von Motortemperatur, Außentemperatur, Feuchtigkeit, Belastung, insbesondere Biegebelastung, und/oder Winkelstellung von Auslegerarmen und/oder die Neigung von Förderbändern verbunden sind. Wenn beispielsweise zusätzlich zu der Erfassung der Qualität der Spannungsversorgung auch Meßwerte wie beispielsweise Motortemperatur, Außentemperatur :und/oder Feuchtigkeit im Meßdatenspeicher abgelegt werden, kann frühzeitig oder aber auch nachträglich das Entstehen von Isolationsschäden od.dgl. erkannt werden, und es können beispielsweise die jeweils für den Betrieb der Maschine geeigneten Betriebsparameter an die speziellen Gegebenheiten eines bestimmten Abbauortes angepaßt werden, um die Gefahr eines Ausfalles zu verringern.

Es können bei der nachträglichen Auswertung der gespeicherten Werte beliebige Meßwerte miteinander in Korrelation gesetzt werden, und es können aus derartigen Korrelationen neue Erkenntnisse gewonnen werden, welche bei einer kontinuierlichen Überwachung der einzelnen Meßdaten in keiner Weise sichtbar werden. Insbesondere die nachträgliche Möglichkeit, das Auswerteschema zu modifizieren, um Ursachen von Defekten zu ergründen, stellt hierbei einen besonderen Vorteil dar, wobei ggf. auch eine Fernübertragung der Speicherinhalte in eine Überwachungszentrale zum Zwecke einer derartigen, jeweils dem Einsatzort angepaßten Auswertung vorgesehen sein kann.

Erfindungsgemäß wird somit die Verwendung eines mobilen Meßdatenspeichers als Überwachungseinrichtung für mit elektrischen Antrieben ausgestattete Bergbaumaschinen vorgeschlagen.

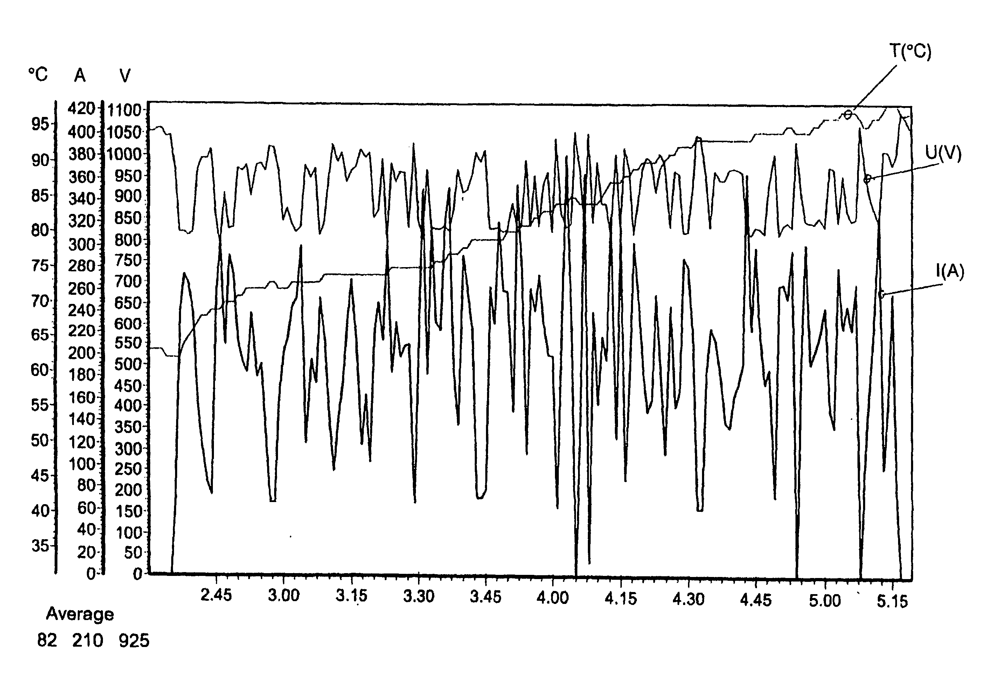

Die Erfindung wird nachfolgend anhand eines über ein definiertes Zeitintervall erstellten Diagramms von Meßwerten für die Motortemperatur, den Stromverbrauch und die Spannungsversorgung näher erläutert. In der Zeichnung sind auf der y-Achse jeweils Spannung in Volt, Stromverbrauch in Ampere und die Motortemperatur in °C aufgetragen, wohingegen die x-Achse die Zeitachse darstellt. Aus den jeweils zu bestimmten Zeitpunkten abgelegten Meßwerten ergeben sich nun die in der Zeichnung dargestellten Kurven für die Schwankungen von Stromverbrauch, Spannung und Temperatur, und es ist unmittelbar ersichtlich, daß immer dann, wenn jeweils aktuelle Werte miteinander verglichen werden, unmittelbar festgelegt werden kann, ob alle diese Werte oder nur ein Teil dieser Werte in vorgegebenen Grenzen liegt und daher als zulässig angesehen werden kann. Erst aus der Zusammenschau der Kurvenverläufe ergibt sich, daß sich über einen bestimmten Zeitraum hinweg Veränderungen darstellen lassen. Dies gilt im Falle des in der Zeichnung dargestellten Zeitintervalls beispielsweise für einen mehr oder minder kontinuierlichen Anstieg der Motortemperatur, welcher sich insbesondere in einem Zeitraum ergibt, in welchem der Stromverbrauch punktuell und zu bestimmten Zeitpunkten wesentlich geringer wird. Das Absinken des Stromverbrauchs, der Anstieg der Temperatur und die im wesentlichen nicht signifikanten Änderungen in der Versorgungsspannung lassen somit früh erkennen, daß hier offensichtlich Zusammenhänge abgeleitet werden können, wobei gleichzeitig davon ausgegangen werden darf, daß zu keinem Zeitpunkt für sich gesehen jeweils unzulässige Betriebsbedingungen vorgelegen sind. Erst die Zwischenspeicherung der Werte über einen längeren Zeitraum erlaubt es somit, Korrelationen zu erkennen, wie sie bei einer nachträglichen und jeweils an die Fragestellung angepaßten Auswertung erzielt werden können.

## Patentansprüche

1. Einrichtung zum Überwachen von Streckenvortriebs- oder Gewinnungsmaschinen, bei welcher Meßdaten für Betriebsparameter wie z.B. die Leistungsaufnahme, die Motortemperatur oder die Schrämarmstellung erfaßt werden, **dadurch gekennzeichnet, daß** ein von den Kontroll- und Steuereinrichtungen der Vortriebsmaschine verschiedener und lösbar mit der Maschine verbundener Meßdatenspeicher vorgesehen ist, in welchem die Meßdaten gemeinsam mit der aus einer Zeitbasis des Meßdatenspeichers abgeleiteten Zeit über einen vorbestimmten Zeitraum speicherbar sind und mit welchem Sensoren für die Erfassung von für jede Phase gesonderten Meßdaten für Spannung, Stromverbrauch und Frequenz der Spannungsversorgung verbunden sind und daß der Meßdatenspeicher eine mechanisch oder elektronisch sperrbare Schnittstellen für das Ein- bzw. Auslesen der gespeicherten Daten aufweist.

2. Einrichtung nach Anspruch 1, **dadurch gekennzeichnet, daß** mit dem Meßdatenspeicher zusätzlich Sensoren für die Erfassung von Motortemperatur, Außentemperatur, Feuchtigkeit, Belastung, insbesondere Biegebelastung, und/oder Winkelstellung von Auslegerarmen und/oder die Neigung von Förderbändern verbunden sind.

## Claims

1. Device for monitoring tunnelling or mining machines, with which measured data for operating parameters such as, for example, the power consumption, motor temperature or cutting arm position are determined, **characterised in that** a measured data memory is provided that is separate from the monitoring and control devices of the tunnelling machine and is detachably connected to the machine, in which the measured data can be stored together with the time over a predetermined period deduced from a time base of the measured data memory, and to which sensors for determining for each phase separate measured data for voltage, power consumption and frequency of the voltage supply are connected, and **in that** the measured data memory has a mechanically or electronically lockable interface for the input and read-out of the stored data.

2. Device according to claim 1, **characterised in that** additional sensors for determining motor temperature, outside temperature, humidity, loading, especially bending load, and/or the angle position of arms and/or the gradient of conveyor belts, are connected to the measured data memory.

## Revendications

1. Dispositif pour la surveillance de machines de traçage de galeries ou d'extraction, dans léquel des données de mesure concernant des paramètres de fonctionnement tels que la puissance absorbée, la température du moteur ou la position du bras haveur sont relevées, **caractérisé en ce qu'**il est prévu une mémoire de données de mesure distincte des dispositifs de contrôle et de commande de la machine de traçage et reliée de manière amovible à la machine, dans laquelle les données de mesure peuvent être enregistrées en même temps qu'une heure tirée d'une base de temps de la mémoire de données de mesure sur une période prédéterminée et avec laquelle communiquent des capteurs permettant, pour chaque phase, le relevé de données de mesure concernant la tension, la consommation électrique et la fréquence de l'alimentation électrique, et **en ce que** la mémoire de données de mesure présente des interfaces pouvant être verrouillées mécaniquement ou électroniquement pour l'écriture ou la lecture des données mémorisées.

2. Dispositif selon la revendication 1, **caractérisé en ce que** la mémoire de données de mesure communique en outre avec des capteurs destinés à relever la température du moteur, la température extérieure, l'humidité, la charge, notamment la contrainte en flexion, et/ou la position angulaire de bras et/ou l'inclinaison de convoyeurs à bande.
